Europäisches Patentamt

European Patent Office

Office européen des brevets

(19)

(11) Veröffentlichungsnummer : **0 051 079**
**B1**

(12) **EUROPÄISCHE PATENTSCHRIFT**

(45) Veröffentlichungstag der Patentschrift :
26.09.84

(21) Anmeldenummer : 80106726.5

(22) Anmeldetag : 03.11.80

(51) Int. Cl.³ : **G 06 F 7/50**, G 06 F 7/544

(54) **Binäres MOS-Ripple-Carry-Parallel-Addier/Subtrahierwerk und dafür geeignete Addier/Subtrahierstufe.**

(43) Veröffentlichungstag der Anmeldung :
**12.05.82 Patentblatt 82/19**

(45) Bekanntmachung des Hinweises auf die Patenterteilung : **26.09.84 Patentblatt 84/39**

(84) Benannte Vertragsstaaten :
**DE FR GB IT NL**

(56) Entgegenhaltungen :
**FR-A- 2 441 214**
**MORRIS & MILLER "Designing with TTL integrated circuits", Texas Instruments electronics series 1971, McGraw-Hill, Kapitel 9, Seiten 211-225, New York, US**
**BIM TECHNICAL DISCLOSURE BULLETIN, Band 17, Nr. 1, Juni 1974, Armonk, US, BERAUD et al.: "High-speed accumulator", Seiten 118-119**

(73) Patentinhaber : **Deutsche ITT Industries GmbH Hans-Bunte-Strasse 19 Postfach 840 D-7800 Freiburg (DE)**
**DE**
**ITT INDUSTRIES INC.**
**320 Park Avenue**
**New York, NY 10022 (US)**
**FR GB IT NL**

(72) Erfinder : **Mlynek, Daniel J., Dr. Ing.**
**7, rue des Jardins**
**F-68600 Wolfgantzen (FR)**

(74) Vertreter : **Stutzer, Gerhard, Dr.**
**Deutsche ITT Industries GmbH Patent- und Lizenzabteilung Hans-Bunte-Strasse 19 Postfach 840 D-7800 Freiburg (DE)**

**Beschreibung**

Die Erfindung betrifft binäre MOS-Ripple-Carry-Parallel-Addier/Subtrahierwerke, die mittels Isolierschicht-Feldeffekttransistoren vom Anreicherungstyp integriert sind, entsprechend den im Oberbegriff des Anspruchs 1 angegebenen Merhmalen. Mit einer solchen Anordnung sollen mehrere im natürlichen n-stelligen Binärcode dargestellte Zahlen durch nacheinander erfolgendes Aufsummieren unter Bildung von Teilsummen aufaddiert bzw. voneinander subtrahiert werden können. Die Teilsummenbildung mit den Zahlen A, B, C ... Z erfolgt dabei nach der folgenden Rekursivformel :

$$A + B + C + ... Z = ((A + B) + C) ... + Z = (Sb + C) ... + Z = Sc ... + Z = Sz.$$

Dabei wird jede Teilsumme in einem Parallel-Addier/Subtrahierer gebildet, der pro Stelle jeder Teilsumme aus einer Addier/Subtrahierstufe besteht. Diese besteht ihrerseits wiederum aus einem das Vorzeichen der Zahl berück sichtigen Umschaltglied, also aus einem Umschaltglied für das Umschalten von Addieren auf Subtrahieren, mit einem ersten Eingang für ein entsprechendes Umschaltsignal und mit einem zweiten Eingang für das im Subtrahierfall als Subtrahend dienende eine von zwei Stellensignalen der Zahl. Ferner besteht die Addier/Subtrahierstufe aus einem Volladdierer, dessen erstem Eingang das im Subtrahierfall als Minuend dienende Stellensignal direkt zugeführt ist und dessen zweiter Eingang am Ausgang des Umschaltglieds liegt.

Derartige Parallel-Addier/Subtrahierer mit den entsprechenden Addier/Subtrahierstufen sind in dem Buch von A. Shah et al « Integrierte Schaltungen in digitalen Systemen », Band 2, Basel 1977, Seiten 124 bis 129, insbesondere Fig. IX.28 auf Seite 125 beschrieben. Ferner sind in dem genannten Buch in allgemeiner Form auf den Seiten 107 bis 109 sogenannte Parallelzähler für die Addition mehrerer Zahlen erläutert. Nach der dortigen Fig. IX.18 besteht der dort so bezeichnete (5,3)-Parallelzähler, der fünf einstellige Zahlen aufsummieren kann, aus in drei Schichten hintereinandergeschalteten unterschiedlichen logischen Verknüpfungsgliedern. Das genannte Buch enthält ferner auf den Seiten 87 bis 103 Hinweise auf im Handel befindliche integrierte Bipolarschaltungen für Addierer.

Eine direkte Übertragung der anhand von integrierten Bipolarschaltungen erläuterten Grundprinzipien der bekannten Parallel-Addier/Subtrahierwerke mit Durchschlingung der Übertragsignale auf mittels Isolierschicht-Feldeffekttransistoren zu integrierende Schaltungen, also auf die sogenannten MOS-Schaltungen, ist nicht ohne weiteres möglich, da die MOS-Schaltungstechnik zum Teil erheblich von der Bipolar-Schaltungstechnik abweicht.

Aus der veröffentlichten Patentanmeldung FR 24 41 214 ist zwar schon ein in MOS-Technik realisierter Paralleladdierer bekannt, mit dem auch mehrere Binärzahlen addierbar sind, jedoch geschieht dies nur zeitlich seriell, also hintereinander. Eine wahlweise Subtraktion ist nicht vorgesehen. Durch entsprechende Schieberegisterstufen ist die Übertragsbildungszeit in jeder Stelle dadurch berücksichtigt, daß ein oder mehrere Schieberegisterstufen vor und/oder hinter dem Volladdierer jeder Stelle angeordnet sind.

Die Erfindung, wie sie in den Ansprüchen gekennzeichnet ist, löst die Aufgabe, bei einem nach dem Prinzip der Durchschlingung des Übertrags (Ripple-Carry) arbeitenden Parallel-Addier/Subtrahierwerk in MOS-Technik, bei dem insbesondere die sogenannte Übertragsrückstellung (Carry Save) (vgl. Seiten 106 und 129 des genannten Buches) auf besonders einfache Art realisiert ist, eines der aufzusummierenden Signale, also beispielsweise eine der Zahlen oder eine der bereits berechneten Teilsummen, mit einer Zweier-Potenz noch zu multiplizieren. Ein derartiger Berecknungsvorgang tritt beispielsweise bei digitalen Filtern auf.

Die durch die Erfindung erreichten Vorteile sind im wesentlichen darin zu sehen, daß auch größere zu integrierende Parallel-Addier/Subtrahier-Werke mit möglichst regelmäßigem Schaltungsaufbau und somit regelmäßigem Layout geschaffen werden, die insbesondere bei Realisierung als zweiphasengetaktete Schaltung hinsichtlich der Realisierung der verwendeten Verzögerungsglieder besonders einfach wird ; diese sind dann nämlich hinsichtlich der Signalübernahme und -weitergabe getaktete Inverter, so daß die Verzögerungszeit durch die halbe Periodendauer der beiden Taktsignale gegeben ist. Außerdem ergibt sich für das die Umschaltbarkeit von Addition auf Subtraktion ermöglichende Antivalenzglied wie es an sich aus Fig. XI.28 auf Seite 125 des genannten Buches bekannt ist, eine wesentlich einfachere MOS-Schaltung.

Ein Ausführungsbeispiel der Erfindung wird nun anhand der Figuren der Zeichnung näher erläutert.

Figur 1 zeigt in Form eines schematischen Blockschaltbilds den Aufbau eines Parallel-Addier/Subtrahierwerks,

Figur 2 zeigt den Aufbau der dabei vorteilhafterweise verwendbaren Addier/Subtrahierstufe und

Figur 3 zeigt ebenfalls in Form eines Blockschaltbilds den Aufbau für zwei aufzusummierende 4-Bit-Zahlen, deren eine mit einer der fünf Zweier-Potenzen $2^2$, $2^1$, $2^0$, $2^{-1}$, $2^{-2}$ wahlweise zu multiplizieren ist.

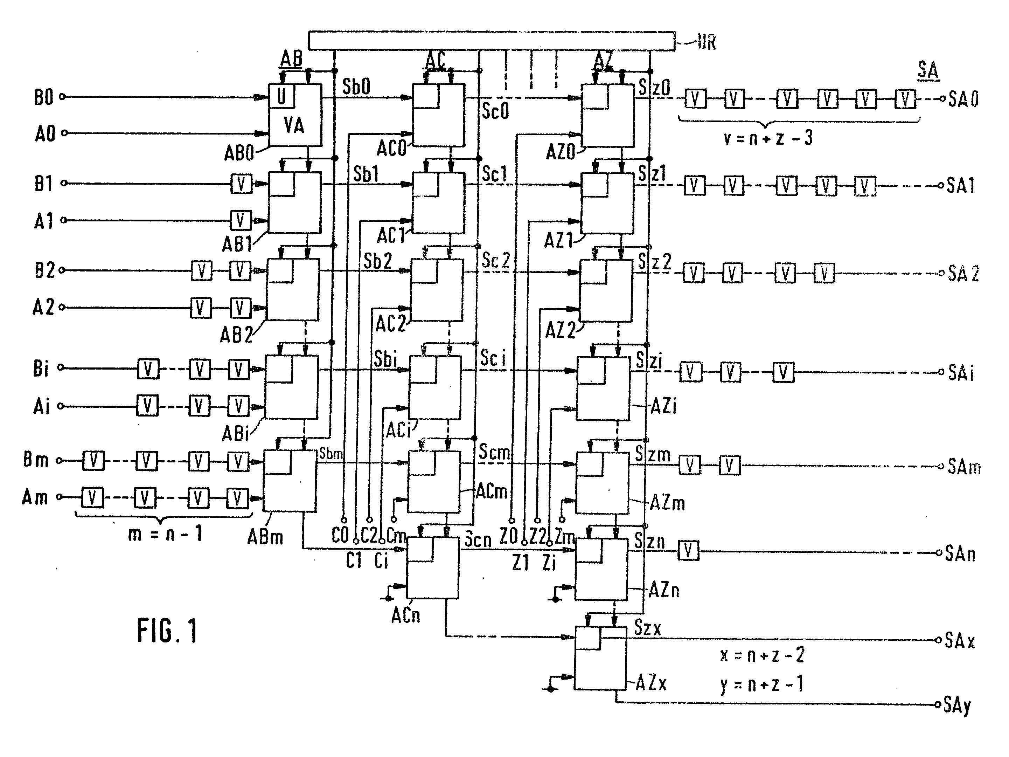

Das in Fig. 1 gezeigte Blockschaltbild ist zur sukzessiven Aufsummierung der Zahlen A, B, C ... Z vorgesehen, wobei die für die Teilsumme Sb = A + B, Sc = Sb + C und Sz = Sc + ... Z erforderlichen Parallel-Addier/Subtrahierer AB, AC, AZ gezeichnet sind, während für die zwischen C und Z liegenden beliebig vielen weiteren aufzusummierenden Zahlen durch entsprechende Strichelung deren Vor-

2

handensein angedeutet ist. Die erwähnten Parallel-Addier/Subtrahierer bestehen ihrerseits, wie eingangs bereits erläutert wurde, aus den einzelnen, jeder Binärstelle der Zahlen und Teilsummen zugeordneten Addier/Subtrahierstufen AB0, AB1, AB2, ABi, ABm ; AC0, AC1, AC2, ACi, ACm, ACn ; AZ0, AZ1, AZ2, AZi, AZm, AZn, AZx, wobei $m = n - 1$ und $x = n + z - 2$ ist, wobei mit z die Anzahl der Zahlen A ... Z bezeichnet ist.

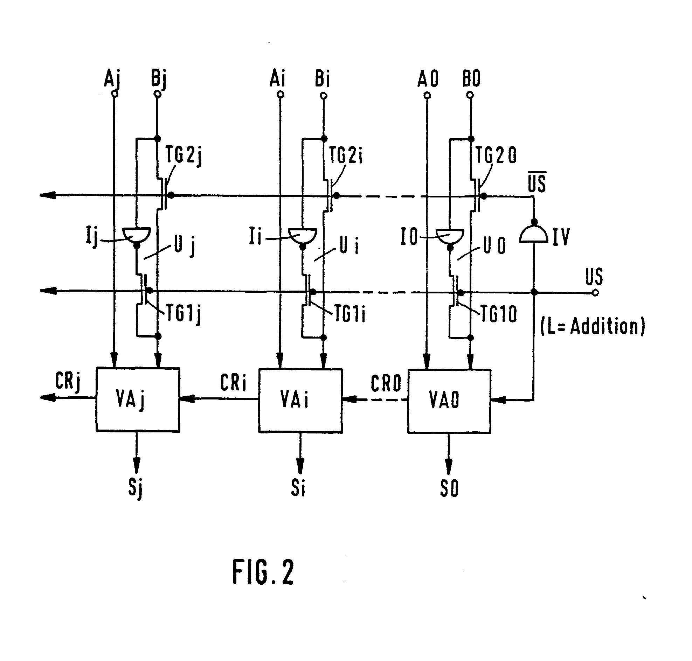

Jede Addier/Subtrahierstufe besteht aus dem üblichen Volladdierer VA und dem Umschaltglied U, das beispielsweise nach der in Fig. 2 gezeigten Schaltung aufgebaut sein kann. Wegen der Übersichtlichkeit der Fig. 1 sind die Bezugszeichen VA und U lediglich in die Addier/Subtrahierstufe AB0 eingetragen.

Die Stellensignale A0, B0 der niedersten Stelle der beiden Zahlen A, B sind dem ersten Eingang des Volladdierers VA und dem zweiten Eingang des Umschaltglieds U zugeführt, dessen erstem Eingang das aus dem Umschalt-Register UR stammende Umschaltsignal zugeführt ist. Im Umschaltregister UR sind Digitalsignale gespeichert, die den bei der Aufsummierung zu berücksichtigenden Vorzeichen der einzelnen Zahlen entsprechen, und zwar bei der für das Ausführungsbeispiel der Fig. 1 vorausgesetzten positiven Logik für Addition, also ein Pluszeichen, der niedrige Binärpegel L und für Subtraktion, also das Minuszeichen, der hohe Binärpegel H.

Es sei nun die weitere Berechnung der niedersten Stellensignale betrachtet. Am Summenausgang des Volladdierers VA der Addier/Subtrahierstufe AB0 entsteht das Summensignal Sb0, das dem zweiten Eingang des Umschaltglieds der Addier/Subtrahierstufe AC0 zugeführt ist, während der Übertragsausgang des Volladdierers VA der Addier/Subtrahierstufe AB0 mit dem Übertragseingang des Volladdierers der zur nächsthöheren Stelle gehörenden Addier/Subtrahierstufe AB1 verbunden ist.

Dem ersten Eingang des Volladdierers der Addier/Subtrahier-Stufe AC0 ist das Stellensignal C0 der Zahl C zugeführt, während dessen Übertragseingang ebenso wie dem ersten Eingang des zugeordneten Umschaltglieds das entsprechende Umschaltsignal zugeführt ist. Am Summenausgang der Addier/Subtrahierstufe AC0 entsteht das Summensignal Sc0, das, wenn die entsprechende Verbindungslinie voll ausgezeichnet gedacht wird, dem zweiten Eingang des Umschaltglieds der Addier/Subtrahierstufe AZ0 zugeführt ist.

Dem ersten Eingang des zur Addier/Subtrahierstufe AZ0 gehörenden Volladdierers ist das Stellensignal Z0 der Zahl Z zugeführt, während am Übertragseingang dieses Volladdierers und am ersten Eingang des zugehörigen Umschaltglieds wiederum das entsprechende Umschaltsignal liegt. Am Summenausgang dieses Volladdierers entsteht somit das Summensignal Sz0.

Die Verknüpfungsweise der bereits erwähnten und zur Teilsumme Sb gehörenden Addier/Subtrahierstufen AB1, AB2, ABi, ABm mit dem zu den Teilsummen Sc und Sz entsprechend gehörenden Addier/Subtrahierstufen AC1, AC2, ACi, ACm, AZ1, AZ2, AZi, AZm mit den Stellensignalen C1, C2, Ci, Cm, Z1, Z2, Zi, Zm und den Summensignalen Sb1, Sb2, Sbi, Sbm, Sc1, Sc2, Sci, Scm, Sz1, Sz2, Szi, Szm, Szn, Szx geschieht in der gleichen, eben geschilderten Art und Weise. Dabei sind jedoch die in Fig. 1 gezeigten drei Addier/Subtrahierstufen ACn, AZn, AZx nicht mehr solche wie die übrigen, die Stellensignale der Zahlen zugeführt erhalten, sondern solche, die nur noch Übertragsignale verarbeiten. Dies zeigt z. B. die Speisung der Addier/Subtrahierstufe Acn, die einerseits am zweiten Eingang ihres Umschaltglieds das Übertragsignal des aus der letzten Addierstufe ABm des zur Teilsumme Sb gehörenden Parellel-Addier/Subtrahierers AB zugeführt erhält, während der erste Eingang ihres Volladdierers mit Bezugspotential verbunden ist, also dauernd den niederen Binärsignalpegel L zugeführt erhält. Am Ausgang dieser Addier/Subtrahierstufe ACn wird das höchstwertige Bit des Parallel-Addier/Subtrahierers AC, also das Summensignal Scn erzeugt, so daß die Teilsumme Sc eine Binärstelle mehr hat als die Teilsumme Sb.

Jeder nachfolgende Parallel-Addier/Subtrahierer ist durch eine weitere Addier/Subtrahierstufe in der beschriebenen Weise zu erweitern, so daß schließlich der Parellel-Addier/Subtrahierer AZ z-n-2 weitere Addier/Subtrahierstufen aufweist, von denen die mit den Bezugszeichen AZn und AZx in Fig. 1 gezeigt sind.

Diese eben geschilderte Erweiterung über die Binärstellenzahl n der Zahlen A, B, C ... Z hinaus ergibt sich aufgrund der mathematischen Tatsache, daß die Aufsummierung von z n-stelligen Binärzahlen zu einer Summe führt, die $n + z - 1$ Binärstellen hat. Da sich die höchstwertige Stelle dieser Summe als Übertrag bei der Addition ergibt, sind somit im Parallel-Addier/Subtrahierer der letzten Teilsumme $n + z - 2$ Addier/Subtrahierstufen erforderlich.

Während die beiden Stellensignale A0, B0 direkt der niederstwertigen Addier/Subtrahierstufe AB0 des Parallel-Addier/Subtrahiers AB zugeführt werden, werden nun entsprechend der Erfindung die einzelnen nächsthöheren Stellensignale den entsprechenden Addierstufen jeweils über Verzögerungsglieder V zugeführt, deren Anzahl von Stufe zu Stufe jeweils um eins zunimmt. So werden die Stellensignale A1, B1 der Addier/Subtrahierstufe AB1 über je ein Verzögerungsglied V zugeführt, die Stellensignale A2, B2 der Addier/Subtrahierstufe AB2 jeweiils über zwei seriengeschaltete Verzögerungsglieder V, die Stellensignale Ai, Bi der Addier/Subtrahierstufe ABi über i seriengeschaltete Verzögerungsglieder V und schließlich die höchstwertigen Stellensignale Am, Bm der Addier/Subtrahierstufe ABm jeweils über $m = n - 1$ seriengeschaltete Verzögerungsglieder V zugeführt. Durch die Einfügung der Verzögerungsglieder V wird erreicht, daß beispielsweise in der Addier/Subtrahierstufe AB1 die zu summierenden Stellensignale A1, B1 erst zu einem Zeitpunkt am Eingang erscheinen, zu dem auch das Übertragsignal aus der die niedersten Stellensignale A0, B0 verarbeitenden Addier/Subtrahierstufe AB0

zur Verfügung steht. Die höchstwertigen Stellensignale Am, Bm stehen somit an den Eingängen der höchstwertigen Addier/Subtrahierstufe ABm erst dann zur Verfügung, wenn an deren Übertragseingang auch das Übertragsignal aus der vorangehenden Addier/Subtrahierstufe auftritt. Somit ist es im Gegensatz zum bekannten Stand der Technik nicht erforderlich, spezielle Stufen für die Übertragsrückstellung vorzusehen.

So wie auf der Eingangsseite des Parallel-Addier/Subtrahierwerks die Verzögerungsglieder V bei steigender Wertigkeit der Stellensignale in ihrer Anzahl um eins zunehmen, müssen nun nach einem weiteren wesentlichen Merkmal der Erfindung auf der Ausgangsseite ebenfalls gleichartige Verzögerungsglieder V vorgesehen werden, deren Anzahl jedoch bei steigender Wertigkeit der Ausgangsstellensignale jeweils um eins abnimmt. Die höchstwertige Addier/Subtrahierstufe AZx des Parallel-Addier/Subtrahierers AZ weist somit wie die niederstwertige Addier/Subtrahierstufe AB0 des Parallel-Addier/Subtrahierers AB kein Verzögerungsglied V auf, d. h. ihr das Summensignal Szx liefernder Ausgang ist direkt mit dem Ausgang SAx des Summenausgangs SA verbunden. Bereits in der nächstniederen Addier/Subtrahierstufe, die in Fig. 1 jedoch nicht gezeigt ist, liegt zwischen ihrem das entsprechende Summensignal abgebenden Ausgang und dem zugeordneten Ausgang des Summenausgangs SA ein Verzögerungsglied V. Dies setzt sich nun nach den niedrigerwertigen Addier/Subtrahierstufen des Parallel-Addier/Subtrahierers AZ hin derart fort, daß jeweils zwischen dem das entsprechende Summensignal liefernden Ausgang und dem entsprechenden Ausgang des Summenausgangs SA von Stufe zu Stufe ein Verzögerungsglied V mehr eingefügt wird.

In Fig. 1 kann diese Gesetzmäßigkeit aufgrund der für den bereits geschilderten Aufbau gewählten Darstellungsweise nur unvollkommen dargestellt werden ; jedenfalls ist durch die gestrichelten Verbindungslinien zwischen den einzelnen Verzögerungsgliedem V und dem zugeordneten Ausgang des Summenausgangs SA angedeutet, daß entsprechend der geschilderten Gesetzmäßigkeit noch entsprechend weitere Verzögerungsglieder vorhanden sind. Denkt man sich andererseits die im Parallel-Addier/Subtrahierer AZ gestrichelt gezeichneten Verbindungen der Übertragsignale durch direkte Verbindungen ersetzt, so wäre dieser ein siebenstufiger Parallel-Addier/Subtrahierer. Dann wären, wie in Fig. 1 tatsächlich gezeigt, seiner sechsten Addier/Subtrahierstufe Szn ein Verzögerungsglied V, seiner fünften zwei Verzögerungsglieder V, seiner vierten drei, seiner dritten vier, zweiten fünf und ersten sechs Verzögerungsglieder V zugeordnet. Allgemein läßt sich für die Höchstzahl der der niederstwertigen Addier/Subtrahierstufe Sz0 zuzuordnenden Verzögerungsglieder V die Regel angeben, daß dafür $v = n + z - 3$ Verzögerungsglieder erforderlich sind, wobei n die Stellenzahl der Zahlen A, B, C ... Z und z die Anzahl dieser Zahlen ist. Denkt man sich wiederum in Fig. 1 die gestrichelt gezeichneten Verbindungen durch direkte Verbindungen ersetzt, so entspräche die Fig. 1 einem Parallel-Addier/Subtrahierwerk für vier fünfstellige Zahlen, so daß $v = 6$ gilt.

Durch die entsprechend der Erfindung im Ausgangskreis eingefügten Verzögerungsglieder V wird also erreicht, daß am Summenausgang SA zum selben Zeitpunkt die einzelnen Stellensignale auftreten, d. h. zu ein und demselben Zeitpunkt liegt das Ausgangsbinärwort in Paralleldarstellung vor.

In Fig. 2 sind einige Addier/Subtrahierstufen gezeigt, die mit Vorteil bei der Erfindung und somit auch beim Ausführungsbeispiel nach Fig. 1 verwendet werden können. Es sind dies die mit den Laufzahlen 0, i, j bezeichneten Stufen, die ihrerseits wieder aus den entsprechenden Volladdierern VA0, VAi, VAj und den zugeordneten Umschaltgliedern U0, Ui, Uj bestehen. Der Aufbau der Volladdierer ist in Fig. 2 nicht näher spezifiziert, was bedeuten soll, daß hierfür übliche Volladdierer-Schaltungen vorgesehen werden können.

Die Umschaltglieder U0, Ui, Uj sind gleichartig aufgebaut und bestehen aus dem Inverter I0, Ii, Ij, dessen Eingang am zweiten Eingang des Umschaltglieds liegt, also an dem Eingang, an dem im Subtrahierfall der Subtrahend eingespeist wird. Diesem zweiten Eingang sind in Fig. 2 die Stellensignale B0, Bi, Bj zugeführt.

Jedes Umschaltglied U0, Ui, Uj besteht ferner aus dem ersten Transferglied TG10, TG1i, TG1j, das mit seinem Signalpfad zwischen dem Inverterausgang und dem Umschaltgliedausgang angeordnet ist. Schließlich ist pro Umschaltglied U0, Ui, Uj noch jeweils das zweite Transferglied TG20, TG2i, TG2j vorgesehen, das mit seinem Signalpfad zwischen dem zweiten Umschaltgliedeingang und dem Umschaltgliedausgang liegt. Mit anderen Worten sind also die Signalpfade der jeweils beiden Transferglieder TG10, TG20 bzw. TG1i, TG2i, bzw. TG1j, TG2j am Umschaltgliedausgang und somit auch am zweiten Volladderereingang miteinander verbunden, während dem anderen Ende des zweiten Transferglieds TG20, TG2i, TG2j das (Subtrahend-) Stellensignal B0, Bi, Bj zugeführt ist.

Die Steuereingänge der ersten Transferglieder TG10, TG1i, TG1j sind miteinander verbunden, und ihnen ist das Umschaltsignal US zugeführt, das bei der, wie bereits erwähnt, vorausgesetzten positiven Logik im Additionsfall das niedere Binärsignal L aufweisen muß.

Die Steuereingänge der zweiten Transferglieder TG20, TG2i, TG2j sind ebenfalls miteinander verbunden, und ihnen ist das über den gemeinsamen Inverter IV invertierte Umschaltsignal $\overline{US}$ zugeführt.

Somit werden im Additionsfall ($\overline{US}$ = L, US = H) die zweiten Transferglieder TG20, TG2i, TG2j leitend gesteuert und somit die Stellensignale B0, Bi, Bj in ihrer nichtinvertierten Form zu den Volladdierern VA0, VAi, VAj weitergeleitet. Im Subtraktionsfall (US = H, $\overline{US}$ = L) sind die zweiten Transferglieder jedoch nichtleitend dagegen die ersten Transferglieder TG10, TG1i, TG1j leitend gesteuert, so daß die Stellensignale B0, Bi, Bj in ihrer invertierten Form an die Volladdierer gelangen. Die Subtraktion erfolgt daher in bekannter Weise durch Komplement-Bildung.

Schließlich ist noch darauf hinzuweisen, daß der Übertragseingang des niederstwertigen Volladdierers VA0 mit dem Umschaltsignal US gespeist ist, d. h. er liegt im Additionsfall auf L, im Subtraktionsfall dagegen auf H, was die Einerkomplement-Subtraktion ermöglicht. Die bei der eingangs geschilderten bekannten Anordnung nach Fig. IX.28 auf Seite 125 des dort genannten Buches erforderliche sogenannte Herumführung des höchstwertigen Übertragsignals zum niederstwertigen Volladdierer (Carry around) ist somit bei der in Fig. 2 gezeigten Anordnung gerade nicht erforderlich, wodurch sich eine erhebliche Reduzierung der Addier/Subtrahierzeit ergibt.

In Fig. 2 ist schließlich noch durch die Bezugszeichen S0, Si, Sj angedeutet, daß dort die Summensignale der entsprechenden Volladdierer abgenommen werden können, und durch die Bezugszeichen CR0, CRi, CRj ist angedeutet, daß dort die Übertragsignale weitergeleitet werden.

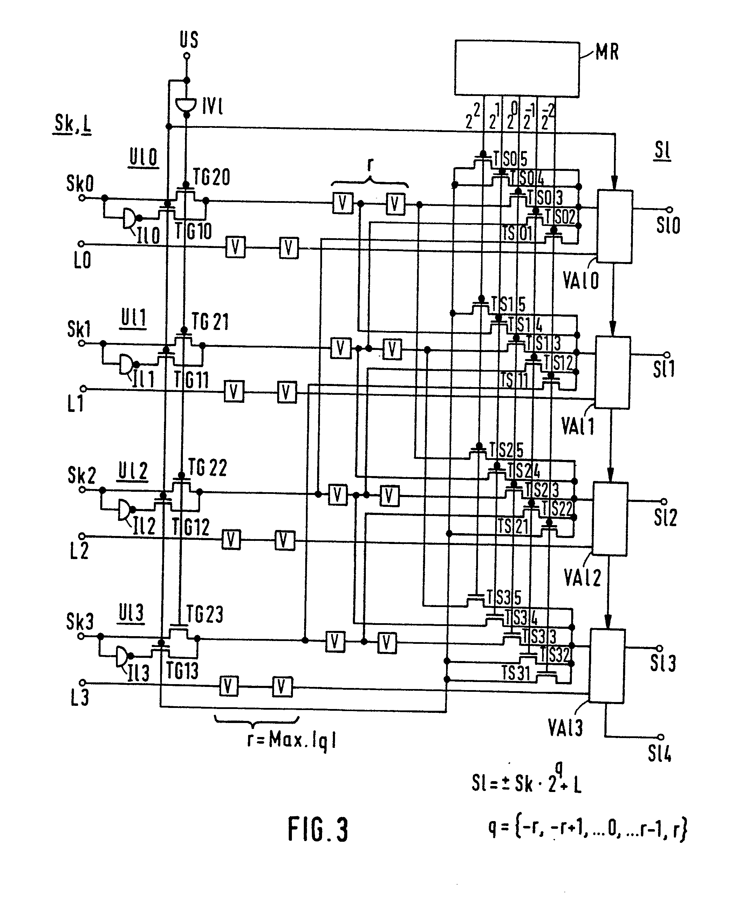

Fig. 3 zeigt, wie eine der Teilsummen oder eine der Zahlen noch mit einem Faktor zu multiplizieren ist, der eine Zweierpotenz mit vorgegebenen Exponenten q ist. Diese Forderung tritt beispielsweise bei in digitalen Filtern zu verwendenden Parallel-Addier/Subtrahierwerken auf Die Zweierpotenz-Multiplikation läßt sich unter Zuhilfenahme der auch für die Umschaltglieder anhand von Fig. 2 gezeigten Transferglieder besonders vorteilhaft realisieren.

In Fig. 3 ist gezeigt, wie mittels der die Teilsumme Sl bildenden Addier/Subtrahierstufen VAl0 VAl1, VAl2, VAl3, die Zahl L und die vorausgehende Teilsumme Sk so addiert werden, daß die Gleichung

$$Sl = \pm Sk \cdot 2^q + L$$

erfüllt wird. Es ist also für das konkrete Ausführungsbeispiel der Fig. 3 vorausgesetzt, daß die Teilsumme Sk und auch die Zahl L vierstellig sind.

Im linken Teil der Fig. 3 sind die Umschaltglieder Ul0, Ul1, Ul2, Ul3 gezeigt die entsprechend aus den Invertern Il0, Il1, Il2, Il3, den ersten Transfergliedern TG10, TG11, TG12, TG13 und den zweiten Transfergliedern TG20, TG21, TG22, TG23 bestehen. Ferner ist der gemeinsame Inverter IVl gezeigt, dem das Umschaltsignal US zugeführt ist, das auch am Übertragseingang des niederstwertigen Volladdierers VA10 liegt.

Zwischen die Ausgänge der Umschaltglieder U10 ... U13 und den entsprechenden Volladdierereingang sind nun zwei weitere Verzögerungsglieder V seriengeschaltet eingefügt, von denen eines jeweils am Ausgang der Umschaltglieder U10 ... U13 liegt. Auf der Volladdiererseite ist ferner noch der Signalpfad der dem Zweierexponenten null zugeordneten Transferstufe TS03, TS13, TS23, TS33 eingefügt.

Am jeweiligen Volladdierereingang liegen ferner pro von null verschiedenen positiven und negativen Zweierexponenten die weiteren Transferstufen TS01, TS02, TS04, TS05 bzw. TS11, TS12, TS14, TS15 bzw. TS21, TS22, TS24, TS25 bzw. TS31, TS32, TS34, TS35. Diese sind im Ausführungsbeispiel so den darin vorgesehenen Zweierpotenzen $2^{-2}$, $2^{-1}$, $2^1$, $2^2$ zugeordnet, daß die Transferglieder mit der Bezugszeichen-Endziffer 1 zu $2^{-2}$, die mit der Endziffer 2 zu $2^{-1}$, mit der Endziffer 4 zu $2^1$ und die mit der Endziffer 5 zu $2^2$ gehören. Die Steuereingänge der Transferstufen TS... liegen an entsprechenden Binärsignalen, die im Multiplikator-Register MR entsprechend gespeichert sind.

Das andere Ende der Signalpfade der nicht zur Zweierpotenz $2^0$ gehörenden Transferstufen TS... liegt nun an entsprechenden Schaltungspunkten in höherwertigen oder niedrigerwertigen Stufen. So sind die zum ersten negativen Exponenten $2^{-1}$ gehörenden Transferstufen TS...2, also das andere Ende ihres Signalpfades, am Verbindungspunkt des vorletzten und des letzten Verzögerungsglieds V für die nächsthöheren Stellensignale angeschlossen, wobei die Zählrichtung für die weiteren Verzögerungsglieder V in Fig. 3 von links nach rechts gilt. Die Transferstufe TS02 (gehört zur niedersten Wertigkeit 0) liegt am Verbindungspunkt der beiden Verzögerungsglieder V in der darunterliegenden Zeile, die zur Wertigkeit 1 gehört. In gleicher Weise liegt die Transferstufe TS12 am Verbindungspunkt der zur darunterliegenden Zeile mit der Wertigkeit 2 gehörenden Verzögerungsglieder V. Vergleichbares gilt auch für die Transferstufe TS22, während die Transferstufe TS32 in der letzten Zeile mit der Wertigkeit 3 am Umschaltsignal US liegt.

Für die zum zweiten negativen Exponenten $2^{-2}$ gehörenden Transferstufen mit der Bezugszeichen-Endziffer 1 gilt, daß sie an einem Verzögerungsglied V in einer zweithöhere Stellensignale verarbeitenden Zeile angeschlossen sind, bzw. bei Nichtvorhandensein dieser Zeile ebenfalls mit dem Umschaltsignal US zu speisen sind. So liegt die Transferstufe TS01 nach Fig. 3 am Eingang des ersten Verzögerungsglieds V in der übernächsten, zur Wertigkeit 2 gehörenden Zeile. Damit vergliechbar ist die Transferstufe TS11 in der Zeile mit der Wertigkeit 1 am Eingang des ersten Verzögerungsglieds V in der Zeile mit der Wertigtigkeit 3 angeschlossen, während die Transferstufen TS21, TS31 am Umschaltsignal US liegen.

Für die den positiven Exponenten $2^1$, $2^2$ zugeordneten Transferstufen mit den Bezugszeichen-Endziffern 4, 5 gilt Entsprechendes, dahingehend modifiziert, daß sie nicht zu Verzögerungsgliedern V in höheren, sondern in niederen Zeilen führen. So liegt beispielsweise die Transferstufe TS34 am Verbindungspunkt der beiden Verzögerungsglieder V in der nächstniederen, zur Wertigkeit 2 gehörenden Zeile, entsprechend die Transferstufe TS24 aus dieser Zeile am Verbindungspunkt der beiden Verzögerungsglieder V in der Zeile mit der Wertigkeit 1 und entsprechend auch die Transferstufe TS14 aus dieser Zeile am entsprechenden Punkt in der Zeile mit der Wertigkeit 0, während die Transferstufe TS04 dieser niedersten Zeile wiederum am Umschaltsignal US liegt.

Für die Transferstufen mit der Bezugszeichen-Endziffer 5 gilt, daß sie in Fig. 3 am Ausgang des letzten Verzögerungsglieds V in der übernächst-niederen Zeile liegen, vgl. beispielsweise die Transferstufe TS35 in der Zeile mit der Wertigkeit 1 und die Transferstufe TS25 in der Zeile mit der niedersten Wertigkeit 0, dagegen die Transferstufen TS15, TS05, die am Umschaltsignal US angeschlossen sind.

Für die Anzahl r der beim Gegenstand der Weiterbildung nach Fig. 3 vorzusehenden weiteren Verzögerungsglieder gilt die allgemeine Regel, daß r dem Maximum des Betrags des Zweierexponenten q ist:

$$r = \text{Max.} \, |q|.$$

q ist andererseits die Menge der ganzen Zahlen: $-r, -r + 1 \ldots 0 \ldots r - 1, r$. Für das Ausführungsbeispiel nach Fig. 3 gilt somit $r = 2$.

Mittels der Transferstufen TS... wird somit eine Zweierpotenz-Multiplikation durch Stellenverschiebung innerhalb des Binärworts realisiert, die an sich bekannt ist. Soll eine derartige Multiplikation erfolgen, so werden die entsprechenden Transferstufen TS... durch das bei der vorausgesetzten positiven Logik entsprechend anliegende H-Signal leitend gesteuert und somit die aus anderen Zeilen stammenden Stellensignale dem entsprechenden Volladdierer VAI... zugeführt.

Bei der oben bereits kurz erwähnten Realisierung der Erfindung als hinsichtlich des Signalflusses zweiphasengetakte Schaltung kommen die Vorteile der Erfindung besonders zur Geltung, da die oben ebenfalls geschilderte Funktionsweise, zu einem bestimmten Zeitpunkt am Ausgang sämtliche Stellensignale zu liefern, damit gut verträglich ist. « Bezüglich des Signalflusses zweiphasen-getaktet » soll hier bedeuten, daß die MOS-Schaltung an sich nach den Prinzipien der statischen Verhältnis-Schaltungstechnik realisiert werden kann, daß aber vor Eingangspunkten und nach Ausgangspunkten jeweils von den beiden Taktsignalen abwechselnd getaktete Transfertransistoren angeordnet sind. Die beiden Taktsignale sind dabei im einfachsten Falle Rechteckspannungen mit dem Impulsdauer-Impulspausen-Verhältnis 1 : 1, die gegeneinander um 180° phasenverschoben sind. die Taktung der Transfertransistoren wird dabei im allgemeinen so vorgenommen, daß, wenn der einem Eingang einer bestimmten Stufe zugeordnete Transfertransistor vom einen Taktsignal gesteuert ist, der dem Ausgang dieser Stufe zugeordnete Transfertransistor dann vom anderen Taktsignal gesteuert ist.

Wird beispielsweise nach diesem Prinzip ein üblicher Inverter mit einem Eingangs-Transfertransistor und einem Ausgangs-Transfertransistor versehen, die von den beiden Taktsignalen gesteuert sind, so beträgt die Verzögerung zwischen dem vor dem Eingangs-Transfertransistor liegenden Signaleingang und dem hinter dem Ausgangs-Transfertransistor liegenden Signalausgang genau die halbe Periodendauer der Taktsignale.

Abschließend sei noch auf ein wesentliches Bemessungsmerkmal der Verzögerungsglieder V nach den Fig. 1 und 3 hingewiesen. Die Verzögerungszeit jedes Verzögerungsglieds V soll nämlich gleich der für die Übertragsbildung eines Volladdierers VA benötigten Zeit sein. Im einfachsten Fall können sie somit durch den eben geschilderten Inverter mit vor- und nachgeschalteten Transfertransistoren realisiert werden, so daß sie dann als Verzögerungszeit die halbe Periodendauer der beiden Taktsignale aufweisen.

Das Parallel-Addier/Subtrahierwerk nach der Erfindung kann mittels MOS-Transistoren gleicher Leitungsart, also entweder in P-Kanal- oder N-Kanal-Technik, integriert werden, wobei es vorteilhaft sein kann, die Lasttransistoren von Invertem und Verknüpfungsgliedern in Form von Verarmungstyptransistoren, also als sogenannte Depletion-Load-Elemente, auszubilden.

Es ist andererseits jedoch auch möglich das Parallel-Addier/Subtrahierwerk nach der Erfindung mittels MOS-Transistoren komplementärer Leitungsart, also in der sogenannten CMOS- oder COSMOS-Technik, zu integrieren. In diesem Falle sind dann die Transferglieder und -stufen CMOS-Transmission-Gates.

**Ansprüche**

1. Monolithisch mittels Isolierschicht-Feldeffekttransistoren vom Anreicherungstyp integriertes Parallel-Addier/Subtrahierwerk für mehrere im natürlichen n-stelligen Binärcode dargestellte Zahlen (A, B, C ... Z) mit Parallel-Addier/Subtrahierern (AB, AC, AZ) mit Durchschlingung der Übertragsignale (binäres MOS-Ripple-Carry-Parallel-Addier/Subtrahierwerk), worin die Aufsummierung der Zahlen (ABC ... Z) nach einander unter Bildung von Teilsummen (Sb, Sc ... Sz) entsprechend

$$A + B + C + \ldots Z = ((A + B) + C) \ldots + Z = (Sb + C) \ldots + Z = Sc \ldots + Z = Sz,$$

erfolgt und pro Stelle jeder erforderlich werdenden Teilsumme eine Addier/Subtrahierstufe (AB..., AC..., AZ...) enthalten ist, die aus einem Umschaltglied (U) für das Umschalten von Addieren auf Subtrahieren mit einem ersten Eingang für ein entsprechendes Umschaltsignal (US) und mit einem zweiten Eingang für das im Subtrahierfall als Subtrahend dienende von zwei Stellensignalen sowie aus einem Volladdierer (VA) besteht, dessen erstem Eingang das im Subtrahierfall als Minuend dienende Stellensignal direkt zugeführt ist und dessen zweiter Eingang am Ausgang des Umschaltglieds (U) liegt, der Ausgang der höchstwertigen Addier/Subtrahierstufe (AZx) des die letzte Teilsumme (Sz) bildenden Parallel-Addier/Subtrahierers (AZ) direkt am Summenausgang (SA) des Parallel-Addier/Subtrahierwerks liegt und den beiden Eingängen der niederstwertigen Addier/Subtrahierstufe (AB0) des ersten Parallel-Addier/Subtrahierers (AB) die beiden niederstwertigen Stellensignale (A0, B0) der Glieder (A, B) der ersten Teilsumme (Sb) direkt zugeführt sind, gekennzeichnet durch folgende Merkmale :

— den beiden Eingängen der nächsthöheren Addier/Subtrahierstufe (AB1) des ersten Parallel-Addier/Subtrahierers (AB) sind die beiden nächsthöheren Stellensignale (A1, B1) der Glieder (A, B) der ersten Teilsumme (Sb) über je ein Verzögerungsglied (V) zugeführt,

— den beiden Eingängen der nächsthöheren Addier/Subtrahierstufe (AB2) des ersten Parallel-Addier/Subtrahierers (AB) sind die beiden nächsthöheren Stellensignale (A2, B2) der Glieder (A, B) der ersten Teilsumme (Sb) über je zwei seriengeschaltete Verzögerungsglieder (V) zugeführt usw. bis zur höchstwertigen Addier/Subtrahierstufe (ABm) des ersten Parallel-Addier/Subtrahierers (AB), deren beiden Eingängen die beiden höchstwertigen Stellensignale (Am, Bm) über je $m = n - 1$ seriengeschaltete Verzögerungsglieder (V) zugeführt sind,

— der Ausgang der nächstniederen Addier/Subtrahierstufe (Azn) des die letzte Teilsumme (Sz) bildenden Parallel-Addier/Subtrahierers (AZ) liegt über eine Verzögerungsstufe (V) am Summenausgang (SA),

— der Ausgang der nächstniederen Addier/Subtrahierstufe (Azm) des die letzte Teilsumme (Sz) bildenden Parallel-Addier/Subtrahierers (AZ) liegt über zwei seriengeschaltete Verzögerungsglieder (V) am Summenausgang (SA), usw. bis zur niederstwertigen Addier/Subtrahierstufe (AZ0), deren Ausgang über $n + z - 3$ seriengeschaltete Verzögerungsglieder (V) am Summenausgang liegt, wobei mit z die Anzahl der zu addierenden Zahlen (A, B, C ... Z) bezeichnet ist,

— alle Verzögerungsglieder (V) haben die gleiche Verzögerungszeit, die gleich der für die Übertragsbildung des Volladdierers (VA) benötigten Zeit ist, und

— eine der Teilsummen (SI) oder eine der Zahlen (A, B, C ... Z) wird dadurch mit einer Zweierpotenz $(2^q)$ multipliziert, daß,

— zwischen den Ausgang jedes Umschaltglieds (UI0 ... UI3) und den zweiten Eingang jedes Volladdierers (VAI0 ... VAI3) dieser Teilsummenbildung in dieser Reihen- und Zählfolge r weitere Verzögerungsglieder (V) gleicher Verzögerungszeit und der Signalpfad einer dem Zweierexponenten null zugeordneten Transferstufe (TS03, TS13 ... TS33) in Serie geschaltet sind, wobei r gleich dem Betrag des Exponenten (q) der höchsten vorgesehenen Zweierpotenz ist ($r = $ Max. $|q|$),

— am zweiten Eingang jedes Volladdierers (VAI0...VAI3) dieser Teilsummenbildung ferner pro von null verschiedenem positivem und negativem Zweierexponenten die Signalpfade von 2r weiteren Transferstufen (TS01, TS02, TS04, TS05 ; TS11... ; TS21... ; TS31...) liegen,

— das andere Ende des Signalpfads der zum ersten negativen Exponenten $(-1)$ gehörenden Transferstufe (TS ... 2) am Verbindungspunkt des vorletzten und des letzten Verzögerungsglieds (V) für die nächsthöheren Stellensignale liegt,

— das andere Ende des Signalpfads der zum zweiten negativen Exponenten $(-2)$ gehörenden Transferstufe (TS ... 1) am Verbindungspunkt des vorletzten und des vorvorletzten Verzögerungsglieds (V) für die zweithöheren Stellensignale usw. bis zur zum negativsten Exponenten gehörenden Transferstufe liegt, von der das andere Ende des Signalpfads am Ausgang des Umschaltglieds (UI...) für die um r höheren Stellensignale bzw. bei Nichtvorhandensein dieser Zeile am Umschaltsignal (US) liegt,

— das andere Ende des Signalpfads der zum höchsten positiven Exponenten (2) gehörenden Transferstufe (TS ... 5) am Verbindungspunkt der letzten Verzögerungsstufe für die um r niedereren Stellensignale mit dem Eingang der dem Exponenten null zugeordneten Transferstufe (TS ... 3) liegt,

— das andere Ende des Signalpfads der zum nächstniedereren positiven Exponenten (1) gehörenden Transferstufe (TS ... 4) am Verbindungspunkt der letzten und der vorletzten Verzögerungsstufe (V) für die um $r - 1$ niedereren Stellensignale, usw. bis zur zum kleinsten positiven Exponenten gehörenden Transferstufe liegt, von der das andere Ende des Signalpfads zwischen der ersten und zweiten Verzögerungsstufe (V) für die nächstniedereren Stellensignale bzw. bei Nichtvorhandensein dieser Zeile am Umschaltsignal (US) liegt,

— den ersten Eingängen jedes Volladdierers (VAI0 ... VAI3) ebenfalls r weitere Verzögerungsstufen (V) gleicher Verzögerungszeit vorgeschaltet sind und

— an den Steuereingängen der zu den einzelnen Zweierexponenten (q) gehörenden Transferstufen ein entsprechendes Zweierpotenz-Steuersignal liegt.

2. Parallel-Addier/Subtrahierwerk nach Anspruch 1, gekennzeichnet durch die Realisierung mittels MOS-Transistoren gleicher Leitungsart (N- oder P-Kanal).

3. Parallel-Addier/Subtrahierwerk nach Anspruch 2, dadurch gekennzeichnet, daß die Lasttransistoren von Invertern und Verknüpfungsgliedern Verarmungstyptransistoren sind.

4. Parallel-Addier/Subtrahierwerk nach Anspruch 1 oder 2, gekennzeichnet durch die Realisierung mittels MOS-Transistoren komplementärer Leitungsart (CMOS- bzw. COSMOS-Technik), wobei die Transferglieder und -stufen CMOS-Transmission-Gates sind.

5. Parallel-Addier/Subtrahierwerk nach einem der Ansprüche 1 bis 4, gekennzeichnet durch die Realisierung als hinsichtlich des Signalflusses zweiphasengetaktete Schaltung.

7

6. Addier/Subtrahierstufe zur Verwendung in einem Parallel-Addier/Subtrahierwerk nach einem der Ansprüche 1 bis 5, gekennzeichnet durch folgende Merkmale :
— die Umschaltglieder (U0, Ui, Uj) bestehen jeweils aus einem Inverter (I0, Ii, Ij) dessen Eingang am zweiten Eingang des Umschaltglieds liegt, ferner jeweils aus einem mit dem Signalpfad zwischen dem Inverterausgang und dem Ausgang des Umschaltglieds liegenden ersten Transferglied (TG10, TG1i, TG1j), dessen Steuereingang der erste Eingang des Umschaltglieds ist, und schließlich jeweils aus einem mit dem Signalpfad zwischen dem zweiten Eingang und dem Ausgang des Umschaltglieds liegenden zweiten Transferglied (TG20, TG2i, TG2j), dessen Steuereingang das über einen allen Umschaltgliedern gemeinsamen Inverter (IV) invertierte Umschaltsignal ($\overline{US}$) zugeführt ist, und
— dem Übertragseingang des Volladdierers (VA0) für die niedersten Stellensignale (A0, B0) ist das Umschaltsignal (US) zugeführt (Fig. 2).


**Claims**

1. Monolithic integrated parallel adder-subtracter using enhancement-mode insulated-gate field-effect transistors for adding/subtracting a plurality of numbers (A, B, C, ..., Z) represented in the n-digit binary code and comprising ripple-carry parallel adders-subtracters (AB, AC, AZ) (binary MOS ripple-carry parallel adder-subtracter), wherein the summation of the numbers (A, B, C, ..., Z) is performed successively by forming partial sums (Sb, Sc ... Sz) according to

$$A + B + C ... Z = ((A + B) + C ... + Z = (Sb + C) ... + Z = Sc ... + Z = Sz,$$

and which contains one adder-subtracter stage (AB..., AC..., AZ...) per digit of each partial sum becoming necessary which consists of a switching section (U) for switching from add to subtract and having a first input for an appropriate switching signal (US) and a second input for that of two digit signals serving as the subtrahend in case of subtraction, and of a full adder (VA) to whose first input the digit signal serving as the minuend in case of subtraction is applied directly and whose second input is connected to the output of the switching section (U), wherein the output of the highest-order adder-subtracter stage (AZx) of the parallel adder-subtracter (AZ) forming the last partial sum (Sz) is connected directly to the sum output (SA) of the parallel adder-subtracter, and wherein the two least significant digit signals (A0, B0) of the terms (A, B) of the first partial sum (Sb) are applied directly to the two inputs of the lowest-order adder-subtracter stage (AB0) of the first parallel adder-subtracter (AB), characterized by the following features :
— the two next higher-order digit signals (A1, B1) of the terms (A, B) of the first partial sum (Sb) are applied to the two inputs of the next higher-order adder-subtracter stage (AB1) of the first parallel adder-subtracter (AB) via one delay element (V) each ;
— the two next higher-order digit signals (A2, B2) of the terms (A, B) of the first partial sum (Sb) are applied to the two inputs of the next higher-order adder-subtracter stage (AB2) via two series-connected delay elements (V) each, etc. up to the highest-order adder-subtracter stage (ABm) of the first parallel adder-subtracter (AB), the two inputs of which highest-order adder-subtracter stage (ABm) are fed with the two most significant digit signals (Am, Bm) via m = n − 1 series-connected delay elements (V) each ;
— the output of the next lower-order adder-subtracter stage (Azn) of the parallel adder-subtracter (AZ) forming the last parial sum (Sz) is connected to the sum output (SA) via a delay element (V) ;
— the output of the next lower-order adder-subtracter stage of the parallel adder-subtracter (AZ) forming the last partial sum (Sz) is connected to the sum output (SA) via two series-connected delay elements (V), etc. up to the lowest-order adder-subtracter stage (AZ0), whose output is connected to the sum output via n + z − 3 series-connected delay elements (V), where z is the quantity of numbers to be added (A, B, C ... Z) ;
— all delay elements (V) provide the same delay, which is equal to the time required by the full adder (VA) for carry generation, and
— to multiply one of the partial sums (S1) or one of the numbers (A, B, C ... Z) by a power of two ($2^q$),
— r additional delay elements (V) providing the same delay and the signal path of a transfer stage (TS03, TS13 ... TS33) assigned to the zero power of two, where r is equal to the absolute value of the highest power (q) of two (r = Max. | 9 |), are connected in series in this order and count sequence between the output of each switching section (U10 ... U13) and the second input of each full adder (VA10 ... VA13) forming this partial sum ;
— the second input of each full adder (VA10 ... VA13) forming this partial sum is also connected to the signal paths of 2r additional transfer stages (TS01, Ts02, TS04, TS05 ; TS11... ; TS21... ; TS31...) per positive and negative power of two which is different from zero ;
— the other end of the signal path of the transfer stage (TS...2) assigned to the first negative exponent (− 1) is connected to the node of the next to the last and last delay elements (V) for the next higher-order digit signals ;
— the other end of the signal path of the transfer stage (TS...1) assigned to the second negative exponent (− 2) is connected to the node of the next to the last and third last delay elements (V) for the next higher-order digit signals but one, etc. up to the transfer stage assigned to the most negative exponent,

8

which has the other end of its signal path connected to the output of the switching section (U1...) for the digit signals higher by r or, in the absence of the row processing such digit signals, to the switching signal (US) ;

— the other end of the signal path of the transfer stage (TS...5) assigned to the highest positive exponent (2) is connected to the node of the last delay element for the digit signals lower by r and the input of the transfer stage (TS...3) assigned to the exponent zero ;

— the other end of the signal path of the transfer stage (TS...4) assigned to the next lower positive exponent (1) is connected to the node of the last and next to the last delay elements (V) for the digit signals lower by r − 1, etc. up to the transfer stage assigned to the smallest positive exponent, which, has the other end of its signal path connected between the first and second delay elements (V) for the next lower-order digit signals or, in the absence of the row processing such digit signals, to the switching signal (US) ;

— the first input of each full adder (VA10 ... VA13) is preceded by r additional delay elements (V) providing the same delay, and

— the control inputs of the transfer stages assigned to the individual powers (q) of two are presented with a corresponding power-of-two-control signal.

2. A parallel adder-subtracter as claimed in claim 1, characterized by implementation using MOS transistors of the same conductivity type (N- or P-channel).

3. A parallel adder-subtracter as claimed in claim 2, characterized in that the load transistors of inverters and logic gates are depletion-mode transistors.

4. A parallel adder-subtracter as claimed in claims 1 or 2, characterized by implementation using MOS transistors of complementary conductivity type (CMOS or COSMOS technology), the transfer elements and stages being CMOS transmission gates.

5. A parallel adder-subtracter as claimed in any one of claims 1 to 4, characterized by implementation as a two-phase-clocked circuit with respect to the signal flow.

6. Adder-subtracter stage for use in a parallel adder-subtracter as claimed in any one of claims 1 to 5, characterized by the following features :

— each of the switching sections (U0, Ui, Uj) consists of an inverter (I0, Ii, Ij) having its input connected to the second input of the switching section, a first transfer element (TG10, TG1i, TG1j) whose signal path is connected between the inverter output and the output of the switching section and whose control input is the first input of the switching section, and a second transfer element (TG20, TG2i, TG2j) whose signal path is connected between the second input and the output of the switching section and to whose control input the switching signal ($\overline{US}$) is applied after being inverted by an inverter (IV) common to all switching sections, and

— the carry input of the full adder (VA0) for the least significant digit signal (A0, B0) is presented with the switching signal (US) (Fig. 2).

## Revendications

1. Système additionneur/soustracteur parallèle monolithique intégré au moyen de transistors à effet de champ à grille isolée du type à enrichissement, pour plusieurs nombres (A, B, C ... Z) représentés en code binaire naturel à N emplacements, comprenant des additionneurs/soustracteurs parallèles (AB, AC, AZ) à propagation interne des signaux de report (système additionneur/soustracteur parallèle binaire MOS-Ripple-Carry), dans lequel la sommation des nombres (A, B, C ... Z) s'effectue séquentiellement en formant des sommes partielles (Sb, Sc ... Sz) selon la règle :

$$A + B + C + ... Z = ((A + B) + C) ... + Z = (Sb + C) ... + Z = Sc ... + Z = Sz,$$

et comprenant, pour chaque emplacement de chaque somme partielle devenant nécessaire, un étage additionneur/soustracteur (AB..., AC..., AZ...) qui est constitué par un organe de commutation (U), pour passer de l'addition à la soustraction, cet organe ayant une première entrée pour un signal de commutation correspondant (US) et une deuxième entrée pour celui de deux signaux d'emplacement qui, en cas de soustraction, représente la grandeur à soustraire, et par un additionneur complet (VA) à la première entrée duquel est directement appliqué le signal d'emplacement qui, en cas de soustraction, sert de terme principal, et dont la deuxième entrée est connectée à la sortie de l'organe de commutation (U), la sortie de l'étage additionneur/soustracteur (AZx) de plus haut rang de l'additionneur/soustracteur parallèle (AZ) formant la dernière somme partielle (Sz) étant directement appliquée à la sortie de somme (SA) du système additionneur/soustracteur parallèle, et les deux signaux d'emplacement de plus faible poids des éléments (AB) de la première somme partielle (Sb) étant directement amenés aux deux entrées de l'étage additionneur/soustracteur (AB0) de plus faible rang du premier additionneur/soustracteur parallèle (AB), caractérisé par les particularités suivantes :

— aux deux entrées de l'étage additionneur/soustracteur de rang immédiatement supérieur du premier additionneur/soustracteur parallèle (AB) sont amenés les deux signaux (A1, B1) d'emplacement de rang immédiatement supérieur des éléments (A, B) de la première somme partielle (Sb), chacun via un élément retardateur (V),

— aux deux entrées de l'étage additionneur/soustracteur de rang immédiatement supérieur (AB2) du premier additionneur/soustracteur parallèle (AB) sont amenés les deux signaux (A2, B2) d'emplacement de rang immédiatement supérieur des éléments (A, B) de la première somme partielle (Sb), cela à chaque fois via deux éléments retardateurs (V) branchés en série, et ainsi de suite jusqu'à l'étage additionneur/soustracteur (ABm) de rang le plus élevé du premier additionneur/soustracteur parallèle (AB) aux deux entrées duquel les deux signaux d'emplacement du plus haut rang (Am, Bm) sont amenés chacun via m = n − 1 éléments retardateurs (V) branchés en série,

— la sortie de l'étage additionneur/soustracteur (Azn) de rang immédiatement inférieur de l'additionneur/soustracteur parallèle (AZ) formant la dernière somme partielle (Sz) est appliquée, via un étage retardateur (V), à la sortie de somme (SA),

— la sortie de l'étage additionneur/soustracteur (Azm) de rang immédiatement inférieur de l'additionneur/soustracteur parallèle (AZ) formant la dernière somme partielle (Sz) est appliquée, via deux éléments retardateurs (V) branchés en série, à la sortie de somme (SA), et ainsi de suite jusqu'à l'étage additionneur/soustracteur (AZ0) de plus faible rang, dont la sortie est appliquée à la sortie de somme via n + z − 3 éléments retardateurs (V) branchés en série, z désignant l'effectif des nombres à additionner (A, B, C ... Z),

— tous les éléments retardateurs (V) ont le même temps de retard qui est égal au temps dont l'additionneur complet (VA) a besoin pour la formation des reports, et

— l'une des sommes partielles (SI), ou l'un des nombres (A, B, C ... Z) est multiplié par une puissance de 2($2^q$) par le fait que :

— entre la sortie de chaque élément de commutation (U10 ... U13) et la deuxième entrée de chaque additionneur complet (VA ... VA13) formant cette somme partielle, dans cet ordre et en séquence, r autres éléments retardateurs (V) ayant même temps de retard et le trajet de signal d'un étage de transfert (TS03, TS13 ... TS33) affecté à l'exposant zéro en base deux, sont branchés en série, r étant égal à la valeur absolue de l'exposant (q) de la plus grande puissance de deux (r = max. | q |),

— à la deuxième entrée de chaque additionneur complet (VA10 ... VA13) forment cette somme partielle, sont aussi connectés, pour chaque exposant de deux positif et négatif différents de zéro, les trajets de signaux de 2 r autres étages de transfert (TS01, TS02, TS04, TS05 ; TS11... ; TS21... ; TS31...),

— l'autre extrémité du trajet de signal de l'étage de transfert (TS...2) relatif au premier exposant négatif (− 1) est connectée au point de connexion de l'avant-dernier et du dernier éléments retardateurs (V) pour les signaux d'emplacement de rang immédiatement supérieur,

— l'autre extrémité du trajet de signal de l'étage de transfert (TS...1) relatif au deuxième exposant négatif (− 2) est connectée point de connexion de l'avant-dernier et de l'avant-avant-dernier éléments retardateurs (V) pour les signaux d'emplacement de rang suivant le rang suivant, et ainsi de suite jusqu'à l'étage de transfert relatif à l'exposant le plus négatif, partant de cet étage de transfert mentionné en dernier, l'autre extrémité du trajet de signal étant appliquée à la sortie de l'organe de commutation (U1...) pour les signaux d'emplacement de rang plus élevé de r unités, ou, en cas d'absence de cet étage, est appliquée au signal de commutation (US),

— l'autre extrémité du trajet de signal de l'étage de transfert (TS...5) relatif à l'exposant positif le plus fort (2) est appliquée au point de connexion du dernier étage retardateur et à l'entrée de l'étage de transfert (TS...3), relatif à l'exposant zéro, pour les signaux d'emplacement de poids de r unités plus faible,

— l'autre extrémité du trajet de signal de l'étage de transfert (TS...4) relatif à l'exposant positif le plus fort (2) est appliquée au point de connexion du dernier étage et de l'avant-dernier étage retardateur (V) pour les signaux d'emplacement de rang plu faible de r − 1 unités, et ainsi de suite jusqu'à l'étage de transfert relatif au plus petit exposant positif, étage d'où l'autre extrémité du trajet de signal est appliquée entre le premier et le deuxième étages retardateurs (V) pour les signaux d'emplacement de rang immédiatement inférieur, ou, en cas d'absence de cet étage, est appliquée au signal de commutation (US),

— les premières entrées de chaque additionneur complet (VA10 ... VA13) sont également précédées de r autres étages retardateurs (V) ayant même temps de retard, et

— aux entrées de commande des étages de transfert relatifs aux divers exposants (q) en base 2 est appliqué un signal de commande de puissance de deux correspondant.

2. Système additionneur/soustracteur parallèle selon la revendication 1, caractérisé par une réalisation au moyen de transistors MOS de même type de conduction (canal N ou P).

3. Système additionneur/soustracteur parallèle selon la revendication 2, caractérisé en ce que les transistors de charge d'inverseurs et de circuits logiques sont des transistors du type à appauvrissement.

4. Système additionneur/soustracteur parallèle selon la revendication 1 ou 2, caractérisé par une réalisation au moyen de transistors MOS à types de conduction complémentaires (technique CMOS ou COSMOS), les éléments et étages de transfert étant des portes de transmission CMOS.

5. Système additionneur/soustracteur parallèle selon l'une des revendications 1 à 4, caractérisé par une réalisation en tant que circuit à flux de signaux commandé par signaux d'horloge biphasés.

6. Etage additionneur/soustracteur pour utilisation dans un système additionneur/soustracteur parallèle, selon l'une des revendications 1 à 5, caractérisé en ce que :

— les éléments commutateurs (U0, Ui, Uj) sont constitués chacun par un inverseur (I0, Ii, Ij) dont

l'entrée est connectée à la deuxième entrée de l'élément commutateur et par un premier élément de transfert (TG10, TG1i, TG1j) dont le trajet de signal est connecté entre la sortie de l'inverseur et la sortie de l'élément de commutation, l'entrée de commande de cet élément de transfert étant la première entrée de l'élément de commutation, et enfin par un deuxième élément de transfert (TG20, TG2i, TG2j) dont le trajet de signal est connecté entre la deuxième entrée et la sortie de l'élément de commutation, l'entrée de commande de ce deuxième élément de transfert recevant le signal de commutation inversé (US) via un inverseur (IV) commun à tous les éléments de commutation,

— l'entrée de report de l'additionneur complet (VA0) pour les signaux d'emplacement de plus faible rang (A0, B0) reçoit le signal de commutation (US) (Fig. 2).

FIG. 1

FIG.2

FIG.3

$$Sl = \pm Sk \cdot 2^q + L$$

$$q = \{-r, -r+1, \ldots 0, \ldots r-1, r\}$$